# EUROPEAN PATENT SPECIFICATION

(11) **EP 2 207 627 B1**
(45) Date of publication and mention of the grant of the patent: **08.06.2016**
(21) Application number: 08836757.8
(22) Date of filing: 01.10.2008
(51) Int. Cl.: B05D 5/12, B32B 27/08, B32B 15/08, H04M 1/18, C23C 18/16, C25D 7/00, C25D 5/10

(54) **METAL COATED STRUCTURAL PARTS FOR PORTABLE ELECTRONIC DEVICES**
METALLBESCHICHTETE BAUELEMENTE FÜR TRAGBARE ELEKTRONISCHE GERÄTE
PIÈCES DE STRUCTURE À PLAQUAGE MÉTALLIQUE POUR DISPOSITIFS ÉLECTRONIQUES

(30) Priority: 04.10.2007 US 997587 P
(43) Date of publication of application: 21.07.2010
(73) Proprietor: Integran Technologies Inc., Mississauga, ON L4V 1H7 (CA)
(72) Inventor: ELIA, Andri, E., Chadds Ford, PA 19317 (US); ROBERTSON, Clive, K., Chadds Ford, PA 19317 (US); HAZEL, Mark, Berkshire SL6 6AH (GB); PALUMBO, Gino, Toronto, ON M9P 2C3 (CA); WANG, Andrew, Toronto, ON M5H 4C9 (CA); GIALLONARDO, Jason, D., Mississauga, ON L4T 3R3 (CA); LIMOGES, Dave, Etobicoke, ON M8W 3Z6 (CA)
(74) Representative: Nowlan, Elke Ursula
(86) International application number: PCT/US2008/011358
(87) International publication number: WO 2009/045431

(56) References cited:
- WO-A1-2006/063468
- US-A- 4 237 259
- US-A- 5 324 766
- US-A1- 2002 072 335
- US-A1- 2002 072 335
- US-A1- 2006 135 282
- US-A1- 2006 135 282
- US-B1- 6 235 408

## Description

### FIELD OF THE INVENTION

Synthetic resins coated with metals are structural members for portable electronic devices such as cell phones.

### TECHNICAL BACKGROUND

Portable electronic devices (PEDs) such as cell phones, personal digital assistants (PDAs), music storage and listening devices (*e*.*g*. *i*-Pods®), portable DVD players, electrical multimeters, notebook computers, etc. are now ubiquitous in many societies. While for convenience sake it is often desirable that these devices be small and/or lightweight they still need to possess a certain structural strength so that they will not be damaged in normal handling and perhaps resist the occasional mishap such as being dropped.

Thus usually built into such devices are structural members whose primary function is to provide strength and/or rigidity and/or impact resistance to the device, and perhaps also provide mounting places for various internal components of the device and/or part or all of the PED case (outer housing). Because of the strength and/or rigidity requirements for these members they are usually made of metal, sometimes a low density metal such as magnesium or aluminum. However use of metals for these parts has drawbacks. Some of these less dense metals such as magnesium are somewhat expensive, and manufacturing the often small and/or intricate parts needed is expensive. The use of metals also sometimes limits design flexibility.

Synthetic resins such as thermosets and thermoplastics can overcome some of the limitations of metals such as making intricate parts and lower density, but typical synthetic resins do not usually have the strength and/or stiffness to be structural members in PEDs. Thus improved structural members for PEDs are needed.

U.S. Patents 5,352,266 and 5,433,797 describe the plating of nanocrystalline metals onto metals. No mention is made of coating synthetic resins.

U.S. Patent 5,837,086 describes the coating of plastic part with a metal foil in a molding tool. The invention is described as providing electrically shielding electronic cases. No mention is made of structural parts or of portable electronic devices.

U.S. Patent 6,966,425 describes a cellular phone housing which has a multilayer metal coating on the housing. No mention is made of structural parts.

U.S. Patent Publication 2006/0135281 describes various articles coated with a fine grained metal coating, and U.S. Patent Publication 2006/0135282 describes a polymeric material coated with a fine grained metallic coating. No mention is made of electronic devices in either publication.

US 6 235 408 B1 describes a laminate structure including a base material made of a resin and a laminate material made of a metal located on one or both surfaces of the base material, wherein the laminate material has a flexural modulus of elasticity larger than that of the base material.

WO 2006/063468 A1 describes fine-grained metallic coatings with an average grain size of 1 nm to 1000 nm containing solid particulates. Means for matching the coefficient of thermal expansion (CTE) of the fine-grained metallic coating and the CTE of the substrate by adjusting the composition of the alloy and/or by varying the chemistry and volume fraction of particulates embedded in the coating are disclosed. The fine-grained metallic coatings are particularly suited for strong and lightweight articles, precision molds, sporting goods, automotive parts and components exposed to thermal cycling.

### SUMMARY OF THE INVENTION

This invention concerns a structural member for a portable electronic device having the features according to claim 1 and a portable electronic device having the features according to claim 16. Preferred embodiments of the invention are defined in the respective dependent claims.

### DETAILS OF THE INVENTION

The structural member comprises a synthetic resin. By a synthetic resin is meant a synthetic polymeric solid material, such as a thermoset resin or a thermoplastic resin. The synthetic resin may be a (semi)crystalline or a glassy material. Useful thermoset resins include epoxy, phenolic, and melamine resins. Parts may be formed from the thermoset resin by conventional methods such as reaction injection molding or compression molding.

Thermoplastic resins are preferred. Useful thermoplastic resins include poly(oxymethylene) and its copolymers; polyesters such as poly(ethylene terephthalate), poly(1,4-butylene terephthalate), poly(1,4-cyclohexyldimethylene terephthalate), and poly(1,3-poropyleneterephthalate); polyamides such as nylon-6,6, nylon-6, nylon-12, nylon-11, nylon-10,10, and aromatic-aliphatic copolyamides; polyolefins such as polyethylene (i.e. all forms such as low density, linear low density, high density, etc.), polypropylene, polystyrene, polystyrene/poly(phenylene oxide) blends, polycarbonates such as poly(bisphenol-A carbonate); fluoropolymers including perfluoropolymers and partially fluorinated polymers such as copolymers of tetrafluoroethylene and hexafluoropropylene, poly(vinyl fluoride), and the copolymers of ethylene and vinylidene fluoride or vinyl fluoride; polysulfides such as poly(p-phenylene sulfide); polyetherketones such as poly(ether-ketones), poly(ether-etherketones), and poly(ether-ketone-ketones); poly(etherimides); acrylonitrile-1,3-butadinene-styrene copolymers; thermoplastic (meth)acrylic polymers such as poly(methyl methacrylate); and chlorinated polymers such as poly(vinyl chloride), polyimides, polyamideimides, vinyl chloride copolymer, and poly(vinylidene chloride). "Thermotropic liquid crystalline polymer" (LCP) herein means a polymer that is anisotropic when tested using the TOT test or any reasonable variation thereof, as described in U.S. Patent 4,118,372, which is hereby incorporated by reference. Useful LCPs include polyesters, poly(ester-amides), and poly(ester-imides). One preferred form of polymer is "all aromatic", that is all of the groups in the polymer main chain are aromatic (except for the linking groups such as ester groups), but side groups which are not aromatic may be present. The thermoplastics may be formed into parts by the usual methods, such as injection molding, thermoforming, compression molding, extrusion, and the like.

The synthetic resin, whether a thermoset or thermoplastic composition may contain other ingredients normally found in such compositions such as fillers, reinforcing agents such as glass and carbon fibers, pigments, dyes, stabilizers, toughening agents, nucleating agents, antioxidants, flame retardants, process aids, and adhesion promoters. Another class of materials may be substances that improve the adhesion to the resin of the metal to be coated onto the resin. Some of these may also fit into one or more of the classes named above. In some instances if the structural part has a complicated shape it may warp during formation, as in injection molding, and it may be advantageous to use a synthetic resin composition which is specifically designed to have low warpage.

The synthetic resin (composition) should preferably not soften significantly at the expected maximum operating temperature that it will reach in the PED. Since it is present for enhanced structural purposes, it will better maintain its overall physical properties if no softening occurs. Thus preferably the synthetic resin has a melting point and/or glass transition temperature and/or a softening at or above the highest use temperature of the synthetic resin. For example the glass transition temperature of the synthetic resin, especially a thermoplastic resin, is preferably at least about 50°C, more preferably at least about 100°C, and very preferably at least about 150°C, when measured using ASTM Method ASTM D3418-82. The glass transition temperature is taken at the transition midpoint. In another preferred form a semicrystalline thermoplastic resin should preferably have a melting point of about 100°C or more, more preferably about 150°C or more, when measured using ASTM Method ASTM D3418-82. The melting point is taken as the peak of the melting endotherm.

By a thermoset polymer is meant a polymeric material which is crosslinked, i.e., is insoluble in solvents and does not melt. It also refers to this type of polymeric material before it is crosslinked, but in the final part it is crosslinked. Preferably the crosslinked thermoset composition has a Heat Deflection Temperature of about 50°C, more preferably about 100°C, very preferably about 150°C or more at a load of 0.455 MPa (66 psi) when measured using ASTM Method D648-07.

The synthetic resin composition should also preferably have a relatively high flexural modulus. Since these are structural parts, and are usually preferred to be stiff, a higher flexural modulus improves the overall stiffness of the metal coated structural part. The synthetic composition should preferably have a flexural modulus of at least about 1 GPa, more preferably at least about 2 GPa, and very preferably at least about 10 GPa. Flexural modulus is measured by ASTM Method D790-03, Procedure A, preferably on molded parts, 3.2 mm thick (1/8 inch), and 12.7 mm (0.5 inch) wide, under a standard laboratory atmosphere.

The synthetic resin may be coated with metal by any known methods for accomplishing that, such as vacuum deposition (including various methods of heating the metal to be deposited), electroless plating, electroplating, chemical vapor deposition, metal sputtering, and electron beam deposition. Preferred methods are electroless plating and electroplating, and a combination of the two. Although the metal may adhere well to the synthetic resin without any special treatment, usually some method for improving adhesion will be used. This may range from simple abrasion of the synthetic resin surface to roughen it, addition of adhesion promotion agents, chemical etching, functionalization of the surface by exposure to plasma and/or radiation (for instance laser or UV radiation) or any combination of these. Which methods may be used will depend on the synthetic resin composition to be coated and the adhesion desired. Methods for improving the adhesion of coated metals to many synthetic resins are well known in the art. More than one metal or metal alloy may be plated onto the synthetic resin, for example one metal or alloy may be plated directly onto the synthetic resin surface because of its good adhesion, and another metal or alloy may be plated on top of that because it has a higher strength and/or stiffness.

Useful metals and alloys to form the metal coating include copper, nickel, iron-nickel, cobalt, cobalt-nickel, and chromium, and combinations of these in different layers. Preferred metals and alloys are copper, nickel, and iron-nickel, and nickel is more preferred.

The surface of the synthetic resin of the structural part may be fully or partly coated with metal. Preferably more than 50% of the surface area will be coated, more preferably all of the surface will be coated. In different areas of the part the thickness and/or the number of metal layers, and/or the composition of the metal layers may vary. The metal may be coated in patterns to efficiently improve one or more properties in certain sections of the structural part.

When electroplating it is known that grain size of the metal deposited may be controlled by the electroplating conditions, see for instance U.S. Patents 5,352,266 and 5,433,797 and U.S. Patent Publication 20060125282, all of which are hereby included by reference. In one preferred form at least one of the metal layers deposited has an average grain size in the range of about 5 nm to about 200 nm, more preferably about 10 nm to about 100 nm. In another preferred form of electroplated metal, the metal has an average grain size of at least 500 nm, preferably at least about 1000 nm. For all these grain size preferences, it is preferred that that thickest metal layer, if there is more than one layer, be the specified grain size.

The thickness of the metal layer(s) deposited on the synthetic resin is not critical, being determined mostly by the desire to minimize weight while providing certain minimum physical properties such as modulus, strength and/or stiffness. These overall properties will depend to a certain extent not only on the thickness and type of metal or alloy used, but also on the design of the structural part and the properties of the synthetic resin composition.

The primary purpose of the parts described herein are to provide the appropriate structural integrity to the PED, such stiffness, strength, impact resistance, etc. The metal coating does, in most cases, provide such improved properties. The metal coated structural parts may provide other benefits and/or functionalities. For instance the metal coating may improve EMI shielding, or may help to cool particular hot portions of the device. For example it an electronic module generates much localized heat a nearly metal coated structural part may absorb some of that heat and the metal coating conduct heat from that particular locale. The metal coating may also provide wear resistance and/or low friction for critical parts for sliding components, as in slide phones. The metal coating of a structural part may also act (with suitable design) as an internal integrated antenna for example a cell phone, and/or EMF shielding.

In one preferred embodiment the flexural modulus of the metal coated structural part is at least about twice, more preferably at least about thrice the flexural modulus of the uncoated synthetic resin composition. This is measured in the following way. The procedure used is ISO Method 178, using molded test bars with dimensions 4 mm thick and 110 mm wide. The testing speed is 2.0 mm/min. The composition from which the structural part is made is molded into the test bars, and then some of the bars are completely coated (optionally except for the ends which do not affect the test results) with the same metal using the same procedure used to coat the structural part. The thickness of the metal coating on the bars is the same as on the structural part. If the thickness on the structural part varies, the test bars will be coated to the greatest metal thickness on the structural part. The flexural moduli of the coated and uncoated bars are then measured, and these values are used to determine the ratio of flexural moduli (flexural modulus of coated/flexural modulus of uncoated). Generally speaking the thicker the metal coating, the greater the flexural modulus ratio between the uncoated and coated synthetic resin part.

In addition, for the same thickness of metal coating, the relative stiffness improvement will be greater for a thinner synthetic resin part than a thicker synthetic resin part. For instance in using typical filled synthetic resins of 1 mm thickness and 4 mm thickness, the relative increase in stiffness coating with a 100 µm thick coating of NiFe alloy, the increase in stiffness for the 4 mm thick synthetic resin part will be about 2-4X times the stiffness of the coated part, while for a 1 mm thick resin part the increase in stiffness will be about 13X the stiffness of the uncoated part. As certain portable electronic devices become smaller (thinner), the benefit of the metal coating increases dramatically. In a preferred form the thickness of the thickest part of the synthetic resin (before metal coating) is 2 mm or less thick, more preferably less than 1 mm thick or less, in the dimension that will eventually be part of the overall smallest dimension of the portable electronic device (usually referred to as the thickness). For example in a cell phone this would be the thickness of the cell phone.

For use as a structural member, it is also important in many instances that the plated synthetic resin composition be tough, for example be able to withstand impacts. It has surprisingly been found that some of the metal plated synthetic resin compositions of the present invention are surprisingly tough. It has previously been reported (M. Corley, et al., Engineering Polyolefins for Metallized Decorative Applications, in Proceedings of TPOs in Automotive 2005, held June 21-23, 2005, Geneva Switzerland, Executive Conference Management, Plymouth, MI 48170 USA, p. 1-6) that unfilled or lightly filled polyolefin plaques have a higher impact energy to break than their Cr plated analog. Indeed the impact strength of the plated plaques range from 50 to 86 percent of the impact strength of the unplated plaques. As can be seen from Examples 2-7 below, the impact maximum energies of the plated plaques are much higher than those of the unplated plaques. It is believed this is due to the higher filler levels of the synthetic resin compositions used, and in the present parts it is preferred that the synthetic resin composition have at least about 25 weight percent, more preferably about 35 weight percent, especially preferably at least about 45 weight percent of filler/reinforcing agent present. A preferred maximum amount of filler/reinforcing agent present is about 65 weight percent. These percentages are based on the total weight of all ingredients present. Typical reinforcing agents/fillers include carbon fiber, glass fiber, aramid fiber, particulate minerals such as clays (various types), mica, silica, calcium carbonate (including limestone), zinc oxide, wollastonite, carbon black, titanium dioxide, alumina, talc, kaolin, microspheres, alumina trihydrate, calcium sulfate, and other minerals.

It is preferred that the ISO179 impact energy (see below for procedure) of the metal plated structural member be 1.2 times or more the impact energy of the unplated synthetic resin composition, more preferably 1.5 times or more. The test is run by making bars of the synthetic resin composition, and plating them by the same method used to make the structural member, with the same thickness of metal applied. If the structural member is metal plated on both sides (of the principal surfaces), the test bars are plated on both sides, while if the structural member is plated on one side (of the principal surfaces) the test bars are plated on one side. The impact energy of the plated bars are compared to the impact energy of bars of the unplated synthetic resin composition.

Preferably the metal coating will about 0.010 mm to about 1.3 mm thick, more preferably about 0.025 mm to about 1.1 mm thick, very preferably about 0.050 to about 1.0 mm thick, and especially preferably about 0.10 to about 0.7 mm thick. It is to be understood that any minimum thickness mentioned above may be combined with any maximum thickness mentioned above to form a different preferred thickness range. These thicknesses do not necessarily apply to all the surfaces of the part, especially in recesses or holes in the part. They do apply especially to those sections of the part where the metal coating will be most effective in increasing the stiffness of that part or a section of that part. The thickness required to attain a certain flexural modulus is also dependent on the metal chosen for the coating. Generally speaking the higher the tensile modulus of the metal, the less will be needed to achieve a given stiffness (flexural modulus).

For these purposes much or all of these structural parts may often not be visible, that is they may be in the interior of the PED, not normally visible in the configuration in which the PED is normally used (although they may be visible if the PED is partially disassembled). Therefore it is preferred that less than 50%, more preferably less than 25%, especially preferably less than 10%, and very preferably none, of the total outer surface area is taken up by the structural part herein. That is, for example, less than 10% (or any of the other limitations above) of the total visible outer surface area of the PED is the structural part.

The structural part may be in any shape so that it performs its desired function. For example it may be a full or partial "frame" around the periphery of the PED, it may in the form of one or more separate beams and/or a number of beams in the form of a latticework, or any combination of these. It may have formed into it items such as mounting holes or other fastening devices such as snap fit connectors between itself and other items of the PED such as circuit boards, microphones, speakers, displays, batteries, covers, housings, electrical or electronic connectors, hinges, antennas, switches, and switchpads.

PEDs in which the present structural parts are useful include cell phones, personal digital assistants (PDAs), music storage and listening devices (e.g. i-Pods®), portable DVD players, electrical multimeters, mobile electronic game consoles, mobile personal computers (such as notebook computers, etc.).

### Example 1

A partially aromatic polyamide composition was made by mixing in a 70 mm Werner & Pfleiderer twin screw extruder: 15 parts polyamide 6,6; 34.1' parts of a polyamide containing made from 1,6-hexandiamine, isophthalic acid, and terephthalic acid wherein the isophthalic:terephthalic ratio was 3:7; 0.4 parts of Chimassorb® 944 FDL (stabilizer from Ciba Specialty Chemical, Tarrytown, NY 10591, USA); 0.2 parts Irganox® 1098 (antioxidant, Ciba); 0.3 parts CAV102 (wax from Clariant Corp., Charlotte, NC 28205, USA)); and 50 parts of PPG3660 chopped glass fiber (PPG Industries, Pittsburgh, PA, USA). All of the ingredients were added at the rear of the extruder except for the chopped glass fiber which was side fed downstream. The barrels of the extruder were held at 280-300°C. Granules were formed from the composition.

The composition was then molded on an injection molding machine at a melt temperature of 280-300°C and a mold temperature of 60°C into a prototype frame for a cellular telephone. The frame, which was approximately rectangular and had one crosspiece on the long dimension, had approximate overall dimensions of about 10.5 cm X 4.8 cm. The frame dimensions themselves varied, but mostly approximated overall 1 mm x 2.5 mm (not necessarily rectangular, in some places cylindrical). The frame had molded into it irregularities where parts of a cell phone would fit, as well as bosses for mounting parts on the frame and/or mounting the frame itself in the telephone.

Some of the frames were etched using Addipost® PM847 etch, reported to be a blend of ethylene glycol and hydrochloric acid, and obtained from Rohm & Haas Chemicals LLC, Philadelphia, PA 19106, USA. A less than 1 µm thick layer of copper was electrolessly applied, and then an 8 µm thick layer of copper was electrolytically formed (the surfaces were completely covered as possible).

The frames were then electrolytically coated by Integran Technologies Inc., Toronto, Canada with a nominal 50 µm thick layer of nickel as described in US Patents 5,352,266 and 5,433,797, and US Patent Publication No. 2006/0135282. all of which are hereby included by reference. This yielded a nickel coating with so-called nanometer grain sizes as described in these patents/application.

The nickel coated frames and uncoated frames (controls) were then tested in specially designed jigs for stiffness, both "torsional" and "flexural". In the flexural test, a test somewhat similar to measurement of flexural properties according to ASTM test D790 (three point) was done to deflect the frames a given amount. The force needed to accomplish that was measured. Similarly for the torsional stiffness the frame was twisted a given amount and the force needed was measured. In the flexural test the amount of force needed for the nickel coated frames was about 3 to 3.5 times that required for the uncoated frames, while in the torsional test the amount of force required for the coated frames (to twist from 0° to 2°) was about twice that required for the uncoated frames. These results show that in a prototypes structural frame for a cellular telephone, coating the frame with only a 50µm thick layer of nickel increases the stiffness of the frame very significantly.

### Examples 2-7

Ingredients used, and their designations in the tables are:
Filler 1 - A calcined, aminosilane coated, kaolin, Polarite® 102A, available from Imerys Co., Paris, France.
Filler 2 - Calmote® UF, a calcium carbonate available from Omya UK, Ltd., Derby DE21 6LY, UK.
Filler 3 - Nyad® G, a wollastonite from Nyco Minerals, Willsboro, NY 12996, USA.
Filler 4 - M10-52 talc manufactured by Barretts Minerals, Inc., Dillon, MT, USA.
Filler 5 - Translink® 445, a treated kaolin available from BASF Corp., Florham Park, NJ 07932, USA.
GF 1 - Chopped (nominal length 3.2 mm) glass fiber, PPG® 3660, available from PPG Industries, Pittsburgh, PA 15272, USA.
GF 2 - Chopped (nominal length 3.2 mm) glass fiber, PPG® 3540, available from PPG Industries, Pittsburgh, PA 15272, USA.
HS1 - A thermal stabilizer containing 78% KI, 11% aluminum distearate, and 11% CuI (by weight).
HS2 - A thermal stabilizer contain 7 parts KI, 11 parts aluminum distearate, and 0.5 parts CuI (by weight).
Lube - Licowax® PE 190 - a polyethylene wax used as a mold lubricant available from Clariant Corp. Charlotte, NC 28205, USA.
Polymer A - Polyamide-6,6, Zytel® 101 available from E.I. DuPont de Nemours & Co., Inc. Wilmington, DE 19810, USA.
Polymer B - Polyamide-6, Durethan® B29 available from Laxness AG, 51369 Leverkusen, Germany.
Polymer C - An ethylene/propylene copolymer grafted with 3 weight percent maleic anhydride.
Polymer D - A copolyamide which is a copolymer of terephthalic acid, 1,6-diaminohexane, and 2-methyl-1,5-diaminopentane, in which each of the diamines is present in equimolar amounts.
Polymer E - Engage®8180, an ethylene/1-octene copolymer available by Dow Chemical Co., Midland, MI, USA.
Wax 1 - N,N'-ethylene bisstearamide
Wax 2 - Licowax® OP, available from Clariant Corp. Charlotte, NC 28205, USA.

The organic polymer compositions used in these examples are listed in Table 1. The compositions were made by melt blending of the ingredients in a 30 mm Werner & Pfleiderer 30 mm twin screw extruder.

**Table 1**

| Ex. | 2 | 3 | 4 | 5 | 6 | 7 |
|---|---|---|---|---|---|---|
| | | | | | | |
| Polymer A | | | | | | 58.38 |
| Polymer B | | | 59.61 | | | |
| Polymer C | 2.00 | 0.90 | | 5.00 | 16.90 | 8.44 |
| Polymer D | 55.00 | 35.97 | | 34.32 | 46.95 | |
| Polymer E | 3.00 | 1.10 | | | | |
| | | | | | | |
| Color concentrate | | 1.00 | | | | |
| | | | | | | |
| Filler 1 | | | | 6.00 | 29.25 | 16.25 |
| Filler 2 | | | 25.00 | | | |
| Filler 3 | | 15.00 | | | | |
| Filler 4 | | 0.35 | | | | |
| Filler 5 | 40.00 | | | | | |
| | | | | | | |
| GF 1 | | 45.00 | | 54.00 | 3.25 | 16.25 |
| GF2 | | | 15.00 | | | |
| | | | | | | |
| HS1 | | 0.43 | | 0.43 | 0.43 | 0.43 |
| HS2 | | | 0.09 | | | |
| | | | | | | |
| Lube | | | | 0.25 | 0.25 | 0.25 |
| | | | | | | |
| Wax 1 | | | 0.30 | | | |
| Wax 2 | | 0.25 | | | | |

The test pieces, which were 7.62x12.70x0.30 cm plaques or ISO 527 test bars, 4 mm thick, gauge width 10 mm, were made by injection molding under the conditions given in Table 2. Before molding the polymer compositions were dried for 6-8 hr in dehumidified air under the temperatures indicated, and had a moisture content of <0.1% before molding.

**Table 2**

| Ex. | Drying Temp., °C | Melt Temp., °C | Mold Temp., °C |
|---|---|---|---|
| | | | |
| 2 | 100 | 320-330 | 140-160 |
| 3 | 100 | 320-330 | 140-160 |
| 4 | 80 | 210-230 | 80 |
| 5 | 100 | 320-330 | 140-160 |
| 6 | 100 | 320-330 | 140-160 |
| 7 | 100 | 320-330 | 140-160 |

These test specimens were then etched in sulfochromic acid or Rohm & Haas Chrome free etching solution, and rendered conductive on all surface by electroless deposition of a very thin layer of Ni. Subsequent galvanic deposition of 8 µm of Cu was followed by deposition of a 100 µm thick layer of fine grain N-Fe (55-45 weight) using a pulsed electric current, as described in US Patent 5,352,266 for making fine grain size metal coatings.

The samples were tested by one or both of the following methods:
ISO 6603-2 - Machine Instron® Dynatup Model 8250, Support Ring 40 mm dia, Hemispherical Tup 20 mm dia, Velocity 2.2 m/s, Impacter weight 44.45 kg, Temperature 23°C, Condition dry as made. Test were run on the plaques described above.
ISO 179-1eU - Sample Unnotched, Pendulum energy 25 J, Impact velocity 3.7 m/s, Temperature 23°C, Condition dry as made. Tests were run on the gauge part of the ISO 527 test bars described above.

Testing results are given in Table 3.

**Table 3**

| Ex. | ISO 6603-2 | | | | ISO 179 | |
|---|---|---|---|---|---|---|
| | Maximum Energy, J | | Maximum Load, kN | | kJ/m² | |
| | Unplated | Ni-Fe Plated | Unplated | Ni-Fe Plated | Unplated | Ni-Fe Plated |
| | | | | | | |
| 2 | | | | | 90.4 | 109 |
| 3 | 2.5 | 6.8 | 1.0 | 2.7 | 50.2 | 100 |
| 4 | 2.3 | 16.2 | 0.9 | 5.0 | 60.3 | 129 |
| 5 | 10.0 | 15.0 | 2.6 | 4.0 | 53.6 | 108 |
| 6 | 8.5 | 23.3 | 1.8 | 4.7 | 40.7 | 87 |
| 7 | 7.8 | 24.3 | 2.3 | 6.8 | | |

## Claims

1. A structural member for a portable electronic device, comprising:
a synthetic resin composition including a filler/reinforcing agent, the filler/reinforcing agent being at least 25% to a maximum of 65 % by weight of the synthetic resin composition, the synthetic resin composition being a thermoplastic polymer having a glass transition temperature of at least 50° C, or, a thermoset with a heat deflection temperature of at least 50 °C at a load of 0.455 MPa, and a metal coating on at least a portion of the synthetic resin composition; wherein the metal coating comprises at least one element selected from the group consisting of copper, cobalt, iron-nickel, and nickel,
wherein the metal coating is 0.010 mm to 1.3 mm thick and includes at least one layer, the at least one layer of said metal coating having an average grain size of 5 nm to 200 nm; and
wherein an impact energy according to ISO 0179 of a section of the polymer composition containing the metal coating having the thickness and average grain size is at least 1.5 times an impact energy of an uncoated section of the organic polymer composition.

2. The structural member of claim 1 wherein said metal coating is from about 0.025 mm to 1.1 mm thick.

3. The structural member of any one of claims 1 or 2, wherein the flexural modulus of a section of the structural member containing the metal coating is at least twice that of said uncoated synthetic resin composition.

4. The structural member of any one of claims 1 to 3 that functions as an antenna.

5. The structural member of claim 1 or 3, wherein said synthetic resin composition comprises a partially aromatic polyamide, in particular, at least one of 1,6-hexanediamine, isophthalic acid and 1,6-hexanediamine, terephthalic acid.

6. The structural member of claim 1 or3, wherein at least one layer of said metal coating has an average grain size of at least about 500 nm, preferably an average grain size of at least 1000 nm.

7. The structural member of claim 1, wherein said filler/reinforcement agent is at least 45 % per weight and at a maximum 65 % by weight of the polymer composition based on the total weight of all ingredients.

8. The structural member of claim 1 or 3, wherein said synthetic resin composition comprises at least one of a semicrystalline and a glassy synthetic resin.

9. The structural member of claim 1 or 3, wherein said synthetic resin composition comprises a thermoset resin.

10. The structural member of any one of claims 1 or 3 that provides at least one property selected from the group consisting of EMI shielding, wear resistance and low friction for sliding components and cooling hot portions.

11. The structural member of any one of claims 1 or 3 that is located in the interior of the personal electronic device and is not visible.

12. The structural member of claim 11 which is at least one of a frame around the periphery of the personal electronic device, one or more beams, a latticework optionally containing mounting holes, fastening devices, and snap fit connectors.

13. A portable electronic device comprising one or more structural members according to any of the preceding claims.

14. The portable electronic device of claim 13, wherein said structural member is less than 50 % of the total outer, visible surface area of the portable electronic device.

15. The portable electronic device of claim 13 or 14 that is a cell phone, personal digital assistant, music storage and listening device, portable DVD player, electrical multimeter, mobile electronic game console, or mobile personal computer.

## Patentansprüche

1. Bauteil für eine tragbare elektronische Vorrichtung, umfassend:
eine Kunstharzzusammensetzung, welche ein Füll-/Verstärkungsmittel enthält, wobei das Füll-/Verstärkungsmittel zumindest 25 Gew.% bis zu maximal 65 Gew.% der Kunstharzzusammensetzung ausmacht, wobei die Kunstharzzusammensetzung ein thermoplastisches Polymer, welches eine Glasübergangstemperatur von zumindest 50 °C aufweist, oder ein Duroplast mit einer Wärmeformbeständigkeitstemperatur von zumindest 50 °C bei einer Belastung von 0,455 MPa ist, und eine Metallbeschichtung auf zumindest einem Abschnitt der Kunstharzzusammensetzung; wobei die Metallbeschichtung zumindest ein Element umfasst ausgewählt aus der Gruppe bestehend aus Kupfer, Kobalt, Eisen-Nickel und Nickel,
wobei die Metallbeschichtung 0,010 mm bis 1,3mm dick ist und zumindest eine Schicht enthält, wobei die zumindest eine Schicht der Metallbeschichtung eine Durchschnittskorngröße von 5 nm bis 200 nm aufweist; und
wobei eine Schlagenergie gemäß ISO 0179 eines Bereichs der Polymerzusammensetzung, welche die Metallbeschichtung enthält, welche die Dicke und die Durchschnittskorngröße aufweist, zumindest 1,5 mal einer Schlagenergie eines unbeschichteten Bereichs der organischen Polymerzusammensetzung ist.

2. Bauteil gemäß Anspruch 1, wobei die Metallbeschichtung von ungefähr 0,025 mm bis 1,1 mm dick ist.

3. Bauteil gemäß irgendeinem der Ansprüche 1 oder 2, wobei das Biegemodul eines Bereichs des Bauteils, welcher die Metallbeschichtung enthält, zumindest das Doppelte von dem der unbeschichteten Kunstharzzusammensetzung ist.

4. Bauteil gemäß irgendeinem der Ansprüche 1 bis 3, welches als eine Antenne wirkt.

5. Bauteil gemäß Anspruch 1 oder 3, wobei die Kunstharzzusammensetzung ein teilaromatisches Polyamid umfasst, insbesondere zumindest eines von 1,6-Hexandiamin, Isophthalsäure und 1,6-Hexandiamin, Terephthalsäure.

6. Bauteil gemäß Anspruch 1 oder 3, wobei zumindest eine Schicht der Metallbeschichtung eine Durchschnittskorngröße von ungefähr zumindest 500 nm, vorzugsweise eine Durchschnittskorngröße von zumindest 1000 nm aufweist.

7. Bauteil gemäß Anspruch 1, wobei das Füll-/Verstärkungsmittel zumindest 45 Gew.% und maximal 65 Gew.% der Polymerzusammensetzung basierend auf dem Gesamtgewicht von allen Bestandteilen beträgt.

8. Bauteil gemäß Anspruch 1 oder 3, wobei die Kunstharzzusammensetzung zumindest eines von einem semikristallinen oder einem amorphen Kunstharz umfasst.

9. Bauteil gemäß Anspruch 1 oder 3, wobei die Kunstharzzusammensetzung ein Duroplast umfasst.

10. Bauteil gemäß irgendeinem der Ansprüche 1 oder 3, welches zumindest eine Eigenschaft bereitstellt ausgewählt aus der Gruppe bestehend aus EMI-Abschirmung, Verschleißfestigkeit und eine geringe Reibung für gleitende Komponenten und ein Kühlen von heißen Abschnitten.

11. Bauteil gemäß irgendeinem der Ansprüche 1 oder 3, welches im Inneren der persönlichen elektronischen Vorrichtung angeordnet ist und nicht sichtbar ist.

12. Bauteil gemäß Anspruch 11, welches zumindest eines ist von einem Rahmen um die Peripherie der persönlichen elektronischen Vorrichtung, einer oder mehrere Träger, ein Gitterwerk, welches optional Montagelöcher enthält, Befestigungsvorrichtungen und Schnappverbinder.

13. Tragbare elektronische Vorrichtung umfassend eine oder mehrere Bauteile gemäß irgendeinem der vorhereigen Ansprüche.

14. Tragbare elektronische Vorrichtung gemäß Anspruch 13, wobei das Bauteil weniger als 50 % von der gesamten äußeren sichtbaren Oberfläche der tragbaren elektronischen Vorrichtung ausmacht.

15. Tragbare elektronische Vorrichtung gemäß Anspruch 13 oder 14, welche ein Mobiltelefon, ein Personal Digital Assistant, eine Musikspeicher- und -hörvorrichtung, ein tragbarer DVD-Spieler, ein elektrisches Universalmessgerät, eine mobile elektronische Spielkonsole oder ein mobiler persönlicher Computer ist.

## Revendications

1. Elément structurel pour dispositif électronique portable, comprenant une composition de résine synthétique comprenant un agent de charge / de renforcement, l'agent de charge / de renforcement étant au moins 25% à un maximum de 65% en poids de la composition de résine synthétique, la composition de résine synthétique étant un polymère thermoplastique ayant une température de transition vitreuse d'au moins 50 °C, ou un thermodurcissable ayant une température de déformation à la chaleur d'au moins 50 °C sous une charge de 0,455 MPa, et un revêtement métallique sur au moins une partie de la composition de résine synthétique;
le revêtement métallique comprenant au moins un élément choisi dans le groupe constitué par le cuivre, le cobalt, le fer-nickel, et le nickel,
le revêtement métallique étant de 0,010 mm à 1,3 mm d'épaisseur et comprenant au moins une couche, l'au moins une couche dudit revêtement métallique ayant une taille de grain moyenne de 5 nm à 200 nm; et
une énergie d'impact selon la norme ISO 0179 d'une partie de la composition de polymère contenant le revêtement métallique ayant l'épaisseur et la taille de grain moyenne étant au moins 1,5 fois l'énergie d'un impact d'une section non revêtue de la composition de polymère organique.

2. Elément structurel selon la revendication 1, dans lequel le revêtement métallique est compris entre environ 0,025 mm à 1,1 mm d'épaisseur.

3. Elément structurel selon l'une quelconque des revendications 1 ou 2, dans lequel le module de flexion d'une partie de l'élément structurel contenant la couche de métal est au moins deux fois celle de ladite composition de résine synthétique non revêtue.

4. Elément structurel selon l'une quelconque des revendications 1 à 3, qui fonctionne comme une antenne.

5. Elément structurel selon la revendication 1 ou 3, dans lequel la composition de résine synthétique comprend un polyamide partiellement aromatique, en particulier, au moins l'un de 1,6-hexanediam, l'acide isophtalique et de 1,6-hexanediam, l'acide téréphtalique.

6. Elément structurel selon la revendication 1 ou 3, dans lequel au moins une couche du revêtement métallique présente une granulométrie moyenne d'au moins environ 500 nm, de préférence à une grosseur de grain moyenne d'au moins 1000 nm.

7. Elément structurel selon la revendication 1, dans lequel l'agent de charge / de renforcement est d'au moins 45% par poids et au maximum 65% par poids de la composition de polymère sur la base du poids total de tous les ingrédients.

8. Elément structurel selon la revendication 1 ou 3, dans lequel la composition de la résine synthétique comprend au moins l'une d'une résine semi cristalline et d'une résine synthétique vitreuse.

9. Elément structurel selon la revendication 1 ou 3, dans lequel la composition de résine synthétique comprend une résine thermodurcissable.

10. Elément structurel selon l'une quelconque des revendications 1 ou 3 qui fournit au moins une propriété choisie parmi le groupe constitué d'un blindage EMI, résistance à l'usure et une faible friction de glissement pour les composants et le refroidissement des parties chaudes.

11. Elément structurel selon l'une quelconque des revendications 1 à 3 ou qu'il est située dans l'intérieur d'un dispositif électronique personnel et est invisible.

12. Elément structurel selon la revendication 11, qui est au moins l'un d'un cadre autour de la périphérie du dispositif électronique personnel, d'un ou plusieurs poutres, d'un treillage contenant optionnellement des trous de fixation, de dispositifs de fixation et des connecteurs à encliquetage.

13. Dispositif électronique portable comprenant un ou plusieurs éléments de structure selon l'une quelconque des revendications précédentes.

14. Dispositif électronique portable selon la revendication 13, dans lequel ledit élément structurel est inférieure à 50% du extérieur de la surface totale visible du dispositif électronique portable.

15. Le dispositif électronique portable selon la revendication 13 ou 14, qui est un téléphone cellulaire, assistant numérique personnel, un appareil de stockage et d'écoute de musique, un lecteur DVD portable, un multimètre électrique, une console de jeu électronique mobile, ou un ordinateur personnel mobile.
